# EUROPEAN PATENT APPLICATION

(11) **EP 4 686 000 A1**
(43) Date of publication of application: **28.01.2026**
(21) Application number: 24784236.2
(22) Date of filing: 01.04.2024
(51) Int. Cl.: H01Q 1/38, H01Q 1/32

(54) **ANTENNA DEVICE, ANTENNA ASSEMBLY, AND VEHICLE**

(30) Priority: 03.04.2023 CN 202310367748
(71) Applicant: Huawei Technologies Co., Ltd., Shenzhen, Guangdong 518129 (CN)
(72) Inventor: HU, Xiaomu, Shenzhen, Guangdong 518129 (CN); LIU, Guochang, Shenzhen, Guangdong 518129 (CN); LU, Yang, Shenzhen, Guangdong 518129 (CN); REN, Huasheng, Shenzhen, Guangdong 518129 (CN); CHEN, Hao, Shenzhen, Guangdong 518129 (CN)
(74) Representative: Goddar, Heinz J.
(86) International application number: PCT/CN2024/085353
(87) International publication number: WO 2024/208152

(57) **Abstract**

Embodiments of the present disclosure provide an antenna apparatus, an antenna assembly, and a vehicle. The antenna apparatus (10) includes: a dipole antenna (12), including a first radiation conductor (14) and a second radiation conductor (16) that are adjacent to each other and arranged separately; and a third radiation conductor (18), located on a same plane as the dipole antenna, and at least partially surrounding the first radiation conductor (14) and the second radiation conductor (16). According to the present disclosure, a combination of the dipole antenna and the third radiation conductor used as a ring structure implements a miniaturized wideband antenna. Low-frequency radiation is expanded, while medium-and-high-frequency wideband radiation is basically maintained.

## Description

### CROSS-REFERENCE TO RELATED APPLICATIONS

This application claims priority to Chinese Patent Application No. 202310367748.4, filed on April 3, 2023, and entitled "ANTENNA APPARATUS, ANTENNA ASSEMBLY, AND VEHICLE".

### TECHNICAL FIELD

Embodiments of the present disclosure mainly relate to an antenna, and more specifically, to a vehicle-mounted antenna.

### BACKGROUND

From a perspective of communication, a vehicle is actually a mobile terminal. With development of vehicle intelligence technologies, an increasingly high requirement is imposed on performance of a wireless communication system of a vehicle. A conventional vehicle-mounted communication antenna covers a 4G frequency band. The antenna is usually of a 3D structure. Although a size of the vehicle is large, space for an antenna layout in the vehicle is still insufficient. Usually, there are two conventional antenna layouts. One is to make full use of available space in the vehicle to place an antenna, for example, near a center console or near a rear spoiler of the vehicle. The other is to open a small region dedicated to an antenna, for example, a shark fin antenna or a whip antenna on a roof of the vehicle, where the region is dedicatedly used for arranging the antenna.

With evolution of wireless communication technologies, for example, evolution from 4G to 5G, a communication frequency band is also greatly expanded. Therefore, a bandwidth supported by an antenna used as a wireless signal transceiver apparatus needs to be correspondingly expanded. Conventionally, bandwidth expansion is mainly to increase a quantity of antennas to separately cover different frequency bands. This means that an area occupied by the antenna is further increased, thereby bringing more pressure on the antenna layout. It is expected that a conventional vehicle-mounted antenna can be improved to expand a bandwidth supported by the antenna and can be easily installed on the vehicle.

### SUMMARY

**In** view of the foregoing problems, embodiments of the present disclosure are intended to provide an antenna apparatus, an antenna assembly, and a vehicle, to resolve or alleviate one or more of the foregoing problems.

According to a first aspect of the present disclosure, an antenna apparatus is provided. The antenna apparatus includes: a dipole antenna, including a first radiation conductor and a second radiation conductor that are adjacent to each other and arranged separately; and a third radiation conductor, located on a same plane as the dipole antenna, and at least partially surrounding the first radiation conductor and the second radiation conductor. According to the present disclosure, the dipole antenna and the third radiation conductor used as a ring structure may be combined, to form a miniaturized wideband antenna of a new form. Low-frequency radiation is expanded, while medium-and-high-frequency wideband radiation is basically maintained. In addition, convenient feeding of the dipole antenna may be implemented by using the first radiation conductor and the second radiation conductor that are separated from each other.

The term "at least partially surrounding" should be understood as a case in which the third radiation conductor completely or partially surrounds the first radiation conductor and the second radiation conductor. The third radiation conductor may form a roughly ring structure. When the ring structure is closed, it may be understood that the third radiation conductor completely surrounds the first radiation conductor and the second radiation conductor. When the third radiation conductor is a ring including an opening, it may be understood that the third radiation conductor partially surrounds the first radiation conductor and the second radiation conductor. A position and a size parameter of the opening may be selected based on a frequency range covered by the third radiation conductor and radiation performance at a needed specific frequency or in a needed specific frequency range.

In some embodiments, a sum of lengths of outer circumferential edges of the first radiation conductor and the second radiation conductor is 1/2 of a first wavelength, and the first wavelength represents a wavelength corresponding to a first communication frequency. In some embodiments, the first communication frequency ranges from 1.7 GHz to 2.7 GHz or from 3.3 GHz to 5 GHz. In this way, medium-and-high-frequency radiation in 5G communication can be implemented by using the dipole antenna.

In some embodiments, a sum of lengths of inner circumferential edges of the third radiation conductor is 1/2 of a second wavelength, the second wavelength represents a wavelength corresponding to a second communication frequency, and the first communication frequency is higher than the second communication frequency. In some embodiments, the second communication frequency ranges from 0.7 GHz to 0.96 GHz. In this way, medium-and-low-frequency coverage may be implemented by applying the third radiation conductor.

In some embodiments, the first radiation conductor and the second radiation conductor are oppositely arranged in a first direction, and a length of the third radiation conductor in the first direction is close to or equal to a length of the dipole antenna in the first direction. In this way, it can be ensured that miniaturization of the antenna apparatus is ensured when wideband radiation is implemented.

In some embodiments, the antenna apparatus is fed at adjacent and separated parts of the first radiation conductor and the second radiation conductor. A feeding manner of the two separated parts is simple, and a requirement for a processing technology of the radiation conductor is reduced. In some embodiments, a spacing between the first radiation conductor and the second radiation conductor ranges from 0.5 mm to 8 mm. In some embodiments, the first radiation conductor and the second radiation conductor are configured to perform feeding through a coaxial cable.

In some embodiments, an inner edge contour and/or an outer edge contour of the third radiation conductor coincide/coincides with a part of outer edge contours of both of the first radiation conductor and the second radiation conductor. In some embodiments, an inner edge contour and/or an outer edge contour of the third radiation conductor coincide/coincides with a part of an outer edge contour of one of the first radiation conductor and the second radiation conductor. In this way, feeding may be performed on the third radiation conductor by using the coinciding part between the third radiation conductor and the dipole electrode. In addition, a position relationship and a size relationship of the third radiation conductor relative to the first radiation conductor and the second radiation conductor are further disposed, so that performance requirements related to different frequency bands of the antenna apparatus can be implemented.

In some embodiments, shapes of the first radiation conductor and the second radiation conductor are different from each other. In this way, the first radiation conductor and the second radiation conductor may be formed into various suitable shapes, to implement coverage of different frequency bands of the antenna apparatus and corresponding performance.

In some embodiments, shapes of at least one of the first radiation conductor and the second radiation conductor gradually increase or decrease in an extension direction. In this way, impedance matching of the antenna apparatus can be conveniently implemented.

In some embodiments, one of the first radiation conductor and the second radiation conductor includes an indentation part, the other of the first radiation conductor and the second radiation conductor includes a protrusion part, and the protrusion part at least partially extends into the indentation part. In this way, feeding of the first radiation conductor and the second radiation conductor can be conveniently implemented.

In some embodiments, neither the first radiation conductor nor the second radiation conductor includes an indentation part or a protrusion part. In this way, feeding of the first radiation conductor and the second radiation conductor can also be conveniently implemented.

In some embodiments, the third radiation conductor is a closed ring. In some embodiments, the third radiation conductor is an open ring, and a size of an opening of the open ring is not greater than the sum of the lengths of the outer circumferential edges of the first radiation conductor and the second radiation conductor. In this way, performance requirements related to different frequency bands of the antenna apparatus may be implemented by using a related parameter of the ring shape and/or a related parameter of the opening of the third radiation conductor.

According to a second aspect of the present disclosure, an antenna assembly is provided. The antenna assembly includes: a glass substrate; and the antenna apparatus according to any one of the first aspect. The antenna apparatus is attached to the glass substrate. In this way, glass can be effectively used as a support apparatus of the antenna apparatus, a structure form of the antenna apparatus is simple, only one layer of plane is occupied, and a feeding form is simple.

In some embodiments, the glass substrate includes a plurality of layers of glass, and the antenna apparatus is attached to a surface of innermost glass in the plurality of layers of glass. In this case, feeding of the antenna apparatus can be conveniently implemented. For example, the two separated components may be directly connected to a coaxial radio frequency cable, a microstrip, and a coplanar waveguide for feeding, and a feeding manner is simple. Particularly, the radio frequency cable is directly arranged in a vehicle and connected to a radio frequency interface of a vehicle body. This greatly simplifies cabling.

In some embodiments, the glass substrate includes: upper-layer glass; lower-layer glass; and a coating layer located between the upper-layer glass and the lower-layer glass. The coating layer includes a window region in which no coating is disposed, and the antenna apparatus is installed in a region that is of the glass substrate and that corresponds to the window region. In this way, the antenna apparatus and the glass substrate may be integrated.

In some embodiments, the antenna apparatus is a vehicle-mounted antenna apparatus, and vehicle glass is used as the glass substrate. In some embodiments, the vehicle glass includes a panoramic sunroof, a front windshield, a rear windshield, or vehicle window glass. In this way, the vehicle glass can be effectively used as a carrier of the antenna apparatus, the antenna can be conveniently arranged in the vehicle, and good radio frequency communication performance of the antenna can be ensured.

According to a third aspect of the present disclosure, a vehicle is provided. The vehicle includes: a vehicle body; and one or more antenna assemblies according to any one of the second aspect, where the one or more antenna assemblies are installed on the vehicle body.

These aspects and other aspects of the present invention are more concise and easier to understand in descriptions of the following (a plurality of) embodiments.

### BRIEF DESCRIPTION OF DRAWINGS

The foregoing and other features, advantages, and aspects of embodiments of the present disclosure become more apparent with reference to the accompanying drawings and the following detailed descriptions. In the accompanying drawings, same or similar reference numerals indicate same or similar elements.
FIG. 1 is a diagram of an overall structure of a vehicle according to an embodiment of the present disclosure;
FIG. 2 is a schematic sectional view of a vehicle-mounted antenna installed on vehicle glass according to an embodiment of the present disclosure;
FIG. 3 is a diagram of an antenna apparatus according to a first embodiment of the present disclosure;
FIG. 4a to FIG. 4d are respectively diagrams of simulation of current distributions of an antenna apparatus and a third radiation conductor at different frequencies according to a first embodiment of the present disclosure;
FIG. 5a and FIG. 5b are respectively diagrams of simulation of an S parameter and radiation efficiency of an antenna apparatus according to a first embodiment of the present disclosure;
FIG. 6 is a diagram of an antenna apparatus according to a second embodiment of the present disclosure;
FIG. 7a and FIG. 7b are respectively diagrams of simulation of an S parameter and radiation efficiency of an antenna apparatus according to a second embodiment of the present disclosure;
FIG. 8 is a diagram of an antenna apparatus according to a third embodiment of the present disclosure;
FIG. 9a and FIG. 9b are respectively diagrams of simulation of an S parameter and radiation efficiency of an antenna apparatus according to a third embodiment of the present disclosure;
FIG. 10 is a diagram of an antenna apparatus according to a third embodiment of the present disclosure;
FIG. 11a and FIG. 11b are respectively diagrams of simulation of an S parameter and radiation efficiency of an antenna apparatus according to a third embodiment of the present disclosure; and
FIG. 12a to FIG. 12o are respectively diagrams of an antenna apparatus according to a plurality of embodiments of the present disclosure.

### DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein. Rather, these embodiments are provided for a more thorough and complete understanding of the present disclosure. It should be understood that the accompanying drawings and embodiments of the present disclosure are merely used as examples and are not intended to limit the protection scope of the present disclosure.

In descriptions of embodiments of the present disclosure, the term "include" and similar terms thereof shall be understood as non-exclusive inclusions, that is, "include but are not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included in the following.

As described in Background, a conventional vehicle-mounted antenna covers a 4G frequency band (0.86 GHz to 0.96 GHz, and 1.7 GHz to 2.7 GHz) and is usually of a 3D structure. In consideration of a limitation of an antenna layout on a vehicle body, a conventional solution is to arrange a vehicle-mounted antenna near a center console or near a rear spoiler of the vehicle. An advantage of this solution is that an appearance of the vehicle body is not affected. However, a disadvantage is that radiation performance of the antenna deteriorates near the center console or the spoiler due to various degrees of blocking of the vehicle body and a vehicle window (usually including a sunshade metal coating). This further affects communication performance. Another solution is to arrange the antenna in a region dedicatedly used for arranging the antenna, such as a shark fin antenna or a whip antenna on a roof of the vehicle. An advantage of this solution is that clearance around the antenna is good and the antenna is not blocked. Therefore, the radiation performance of the antenna is good. However, a disadvantage is that the appearance of the vehicle body is greatly affected.

With evolution of wireless communication from 4G to 5G, a frequency band of communication is expanded from 4G (0.86 GHz to 0.96 GHz, and 1.7 GHz to 2.7 GHz) to 5G (0.7 GHz to 0.96 GHz, 1.7 GHz to 2.7 GHz, and 3.3 GHz to 5 GHz). To expand a bandwidth supported by the antenna, one method is to increase a quantity of antennas to separately cover different frequency bands. The other method is to implement multi-band/wideband radiation on a single antenna. Compared with simply increasing the quantity of antennas, implementing multi-band radiation on the single antenna is more advantageous in space efficiency. However, this poses a greater challenge to a wideband design of the antenna. In addition, during the evolution from 4G to 5G, application of a MIMO (multiple-input multiple-output) technology is also upgraded. For example, a quantity of radio frequency transceiver ports is significantly increased, so that diversity or multiplexing of a plurality of paths of signals is implemented through multiple-input multiple-output. This improves performance robustness and a communication rate. This means that a quantity of corresponding antennas also needs to be increased accordingly, for example, from two to four/eight or more. In addition, a spacing between these antennas remains greater than a specific value, for example, needs to be greater than 1/2 of a wavelength corresponding to a minimum frequency electromagnetic wave, so that performance deterioration caused by electromagnetic mutual coupling between antennas can be suppressed. This poses a greater challenge to a design layout of an antenna in limited space.

To resolve the foregoing problems, the present disclosure provides an antenna apparatus. The antenna apparatus can implement multi-band or wideband radiation, occupies only one layer of plane, and can be conveniently molded to a support member such as glass. In this way, the antenna apparatus according to the present disclosure can be used as a vehicle-mounted antenna and be arranged in a vehicle. The following describes in detail an antenna apparatus according to embodiments of the present disclosure with reference to the accompanying drawings.

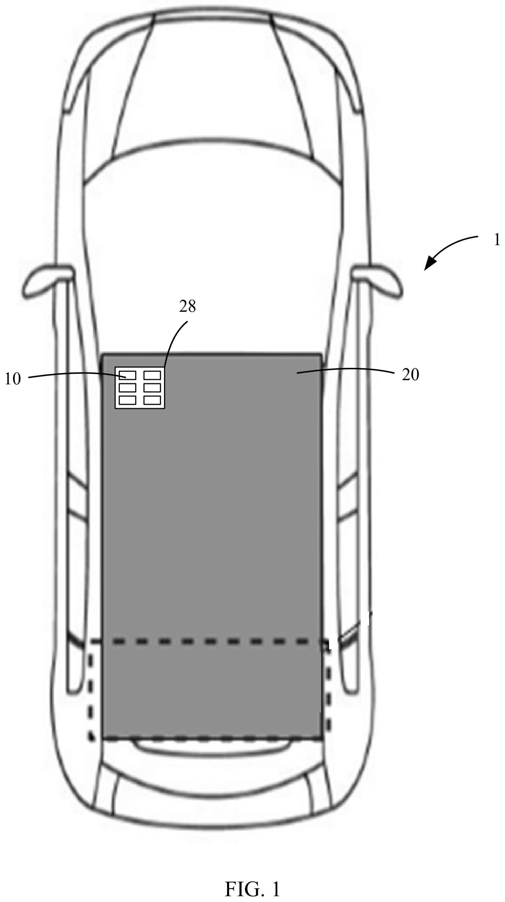

FIG. 1 is a diagram of an overall structure of a vehicle according to an embodiment of the present disclosure. As shown in FIG. 1, the vehicle 1 includes vehicle glass 20 and one or more antenna apparatuses 10. The antenna apparatus 10 is installed on the vehicle glass 20. The vehicle glass occupies a large quantity of regions of the vehicle, and these regions are not developed or used. In consideration of this, an antenna is arranged on the vehicle glass, so that more antennas can be arranged without affecting an appearance of a vehicle body. In addition, because the glass is usually relatively flat and usually has a good clearance, the following case can be avoided: Radiation performance of the antenna is affected due to blocking. The antenna apparatus 10 according to this embodiment of the present disclosure is of a planar structure, and the antenna apparatus can be well fitted to the glass. In this way, molding can be conveniently performed. It should be understood that although the antenna apparatus 10 is arranged on the vehicle glass in the illustrated embodiment, it should be understood that this is merely an example, and the antenna apparatus 10 may be arranged in any other appropriate position of the vehicle.

In some embodiments, the antenna apparatus 10 may be attached to an inner surface or an outer surface of the glass. In the embodiment shown in FIG. 1, a plurality of antenna apparatuses 10 are disposed on a panoramic sunroof. It should be understood that this is merely an example. The glass may be a part other than the panoramic sunroof, for example, a front windshield, a rear windshield, or vehicle window glass. There may be one or more antenna apparatuses 10. In the embodiment shown in FIG. 1, six antenna apparatuses 10 are shown. It should be understood that this is merely an example, and there may be another quantity of antenna apparatuses 10. The plurality of antenna apparatuses 10 may form a MIMO antenna system. The MIMO can implement diversity or multiplexing transmission of a spatial signal, to improve reliability and a transmission speed of wireless communication. Based on a communication performance requirement and a layout space limitation, the antenna apparatus may be arranged in various patterns. For example, the plurality of antenna apparatuses may be arranged linearly in an I-shaped pattern. In some embodiments, the plurality of antenna apparatuses are arranged in a grid-shaped pattern. A spacing between adjacent antenna apparatuses is usually maintained at about or above 1/2 of a wavelength of a minimum frequency of an antenna, to ensure that interference between the adjacent antenna apparatuses 10 is minimized. In some embodiments, the vehicle glass 20 may be provided with a window region 28 in which no coating is disposed. Because no coating is disposed in the window region 28, attenuation of spatial radiation of a main radiation conductor of the antenna can be reduced by disposing the antenna apparatus 10 in the window region.

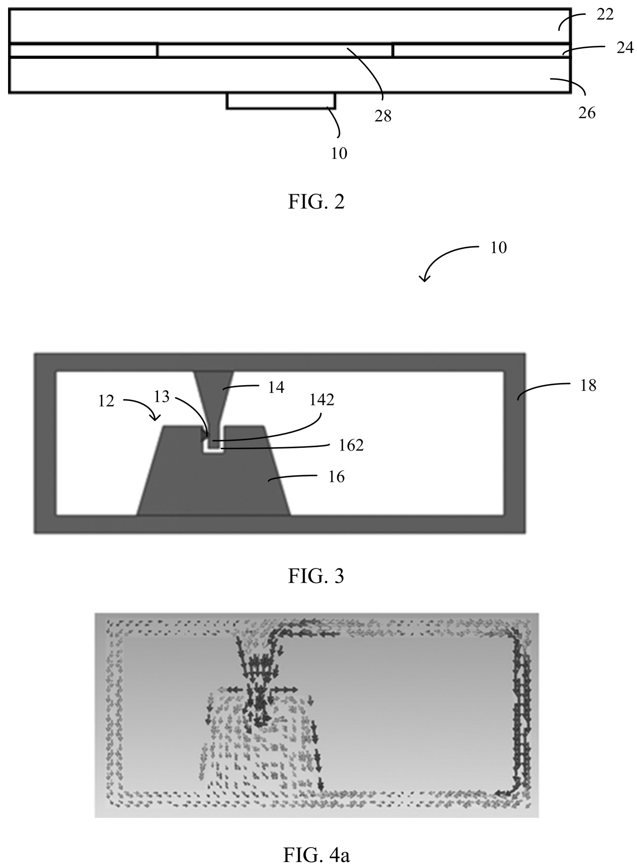

FIG. 2 is a schematic sectional view of a vehicle-mounted antenna installed on vehicle glass according to an embodiment of the present disclosure. As shown in FIG. 2, an antenna assembly includes a glass substrate 20 and an antenna apparatus 10 attached to a surface of the glass substrate 20. The glass substrate is configured to support the antenna apparatus 10, and includes a multi-layer structure. In the illustrated embodiment, the glass substrate 20 includes upper-layer glass 22 and lower-layer glass 26. The upper-layer glass 22 and the lower-layer glass 26 may be bonded by using glue.

In some embodiments, a coating layer 24 is located between the upper-layer glass 22 and the lower-layer glass 26. The coating layer 24 may be used for light shielding and heat insulation. A thickness of a coating of the coating layer 24 is on an order of several to dozens of microns, and a material is usually a composite conductive material. In an embodiment in which the glass substrate 20 includes the coating layer 24, the coating layer 24 includes a window region 28 in which no coating is disposed. The antenna apparatus 10 is installed in a region that is of the glass substrate 20 and that corresponds to the window region 28. In this case, the following case can be avoided: Performance of a radiation conductor of the antenna apparatus is affected by the coating layer 24. Attenuation of spatial radiation of a main radiation conductor of the antenna can be effectively reduced by using the window region 28. In some embodiments, an area of the window region 28 is greater than or equal to a projection area of the main radiation conductor of the antenna. Although the glass substrate 20 in the illustrated embodiment is shown as a three-layer structure that includes the upper-layer glass 22, the coating layer 24, and the lower-layer glass 26, it should be understood that this is merely an example, and the glass substrate 20 may be implemented as a one-layer structure or a more-layer structure.

The radiation conductor of the antenna of the antenna apparatus 10 may be a thin layer of conductive material. For example, a thickness of the thin layer is several to dozens of microns. The radiation conductor of the antenna may be formed on any surface of the glass substrate in various manners (for example, through electroplating/printing). In some embodiments, the antenna apparatus 10 is attached to a surface of innermost glass that is in a plurality of layers of glass and that is in a cabin. This facilitates feeding and wiring of the antenna apparatus 10. In some embodiments, the antenna apparatus 10 may be attached to another glass layer. In this case, complexity of manufacturing glass may increase. For example, a feeding channel may be formed in the another glass layer, to implement feeding of the antenna apparatus 10. For example, when the antenna apparatus is formed on a surface of a middle layer of the glass, the radiation conductor of the antenna needs to be first formed on the surface of the middle layer of the glass, and then upper glass and lower glass are combined. When the radiation conductor of the antenna is formed on a surface of outermost glass or the innermost glass, a glass manufacturing process can be simplified. In addition, a position of the antenna apparatus on the glass substrate affects a feeding design of the radiation conductor of the antenna and a cabling path design for a connection between the radiation conductor of the antenna and a radio frequency cable of a vehicle body. When the antenna apparatus is arranged on an outer surface of glass closest to an interior of the cabin, the radio frequency cable may be directly connected to the antenna and then cabling of the radio frequency cable is performed in the interior of the vehicle. When the antenna apparatus is located at another layer of glass, a hole may need to be punched on the glass body or a joint between the glass and a surrounding vehicle frame, so that the radio frequency cable passes through the hole to connect to an internal vehicle-mounted controller.

The following describes in detail a structure of the antenna apparatus 10 according to embodiments of the present disclosure with reference to FIG. 3 to FIG. 12o.

FIG. 3 is a diagram of an antenna apparatus according to a first embodiment of the present disclosure. The antenna apparatus 10 includes a dipole antenna 12 and a third radiation conductor 18 surrounding the dipole antenna 12. The dipole antenna 12 includes a first radiation conductor 14 and a second radiation conductor 16 that are adjacent to each other and arranged separately. The first radiation conductor 14 and the second radiation conductor 16 are separated from each other in space and arranged adjacent to each other, and the first radiation conductor 14 and the second radiation conductor 16 are located on a same plane. Feeding is performed on the first radiation conductor 14 and the second radiation conductor 16 through a separated interstice, to apply a current/voltage to the first radiation conductor 14 and the second radiation conductor 16. In the embodiment described in FIG. 3, a feeding member 13 extending in a horizontal direction is further shown. The feeding member 13 may be, for example, a coaxial cable. One end of the coaxial cable may be connected to the first radiation conductor 14, and the other end of the coaxial cable may be connected to the second radiation conductor 16.

The first radiation conductor 14 and the second radiation conductor 16 form a radiation characteristic of the dipole antenna. Shapes and sizes of the first radiation conductor 14 and the second radiation conductor 16 are selected, so that impedance matching of a broadband can be implemented for the dipole antenna 12 at a medium and high frequency (for example, 1.7 GHz to 5 GHz). In some embodiments, a sum of lengths of outer circumferential edges of the first radiation conductor 14 and the second radiation conductor 16 is 1/2 of a first wavelength. The first wavelength represents a wavelength corresponding to a first communication frequency used as a medium and high frequency. For example, the first communication frequency ranges from 1.7 GHz to 2.7 GHz or from 3.3 GHz to 5 GHz. It should be understood that the frequency range shown in the figure is merely an example, and the first communication frequency may be another higher frequency.

The third radiation conductor 18 is arranged to partially or completely surround the dipole antenna 12. The third radiation conductor 18 may provide a current radiation path for a low frequency band of the antenna, and expand the low frequency band of the antenna to a low frequency band, for example, 0.7 GHz to 0.96 GHz. According to this embodiment of the present disclosure, the third radiation conductor 18 may be of a roughly ring structure, and is on a same plane as the dipole antenna 12. Upper and lower inner edges of the ring structure may intersect with a part of the outer circumferential edges of the first radiation conductor 14 and the second radiation conductor 16 of the dipole antenna 12. In this way, a central position of the dipole antenna 12 relative to a contact point of the ring structure and a length and a width of the ring structure are adjusted, so that a low frequency band bandwidth of the antenna can be expanded without affecting the radiation characteristic of the original dipole antenna 12 in a high frequency band. In some embodiments, a sum of lengths of outer circumferential edges or inner circumferential edges of the third radiation conductor 18 is 1 to 1.5 times a second wavelength, and the second wavelength represents a wavelength corresponding to a second communication frequency. For example, the second communication frequency ranges from 0.7 GHz to 0.96 GHz. It should be understood that the frequency range shown in the figure is merely an example, and the second communication frequency may be another frequency in the first communication frequency.

In some embodiments, the dipole antenna 12 may be fed at adjacent and separated parts of the first radiation conductor 14 and the second radiation conductor 16. In some embodiments, the first radiation conductor 14 and the second radiation conductor 16 may be configured to perform feeding through a coaxial cable. The first radiation conductor 14 and the second radiation conductor 16 are separated from each other in space by an interstice, and a feeding point is formed at the interstice to apply a current/voltage, to connect the first radiation conductor 14 to the second radiation conductor 16. The first radiation conductor 14 and the second radiation conductor 16 form radiation that approximates a dipole. In some embodiments, a spacing between the first radiation conductor 14 and the second radiation conductor 16 ranges from 0.5 mm to 8 mm. In other embodiments, the first radiation conductor 14 and the second radiation conductor 16 may alternatively feed by using a microstrip or a coplanar waveguide (CPW).

In some embodiments, as shown in FIG. 3, the first radiation conductor 14 may include a protrusion part 142, and the second radiation conductor 16 may include an indentation part 162. The protrusion part 142 at least partially extends into the indentation part 162. In this case, the protrusion part 142 is inserted into the indentation part 162, so that feeding of the first radiation conductor 14 and the second radiation conductor 16 can be conveniently implemented. In the embodiment of FIG. 3, the protrusion part 142 is shown as a rectangle, and the indentation part 162 is shown as a rectangle. It should be understood that this is merely an example, and the protrusion part 142 and the indentation part 162 do not have any shape, and may be formed into any other appropriate shape.

In some embodiments, as shown in FIG. 3, the first radiation conductor 14 is formed in a horn shape, and the second radiation conductor 16 is formed in an isosceles trapezoid shape. It should be understood that this is merely an example, and shapes of the first radiation conductor 14 and the second radiation conductor 16 may be formed into any other appropriate shape. In some embodiments, shapes of the first radiation conductor 14 and the second radiation conductor 16 are tapered shapes. As shown in FIG. 3, shapes of the first radiation conductor 14 and the second radiation conductor 16 gradually taper in a direction toward each other, and these shapes may implement impedance gradients of the first radiation conductor 14 and the second radiation conductor 16. Such a shape has a benefit in impedance matching between the first radiation conductor 14 and the second radiation conductor 16. It should be understood that this is merely an example, and shapes of the first radiation conductor 14 and the second radiation conductor 16 may not be tapered shapes.

In some embodiments, as shown in FIG. 3, the first radiation conductor 14 and the second radiation conductor 16 are oppositely arranged in the direction toward each other. A length of the third radiation conductor 18 in the direction toward each other is close to or equal to a length of the dipole antennas 12 in the direction toward each other. It should be understood that the foregoing sizes are merely examples, and sizes of the third radiation conductor 18 and the dipole antenna 12 may be adjusted based on a needed frequency band range of the antenna apparatus.

In some embodiments, at least a part of an inner edge contour or an outer edge contour of the third radiation conductor 18 coincides with a part of an outer edge contour of at least one of the first radiation conductor 14 and the second radiation conductor 16. In this way, the third radiation conductor 18 may be electrically connected to the at least one of the first radiation conductor 14 and the second radiation conductor 16 by using a coinciding part. In some embodiments, as shown in FIG. 3, at least a part of the inner edge contour of the third radiation conductor 18 coincides with a part of an inner edge contour of each of the first radiation conductor 14 and the second radiation conductor 16, so that power can be supplied to the third radiation conductor 18 by using coinciding parts.

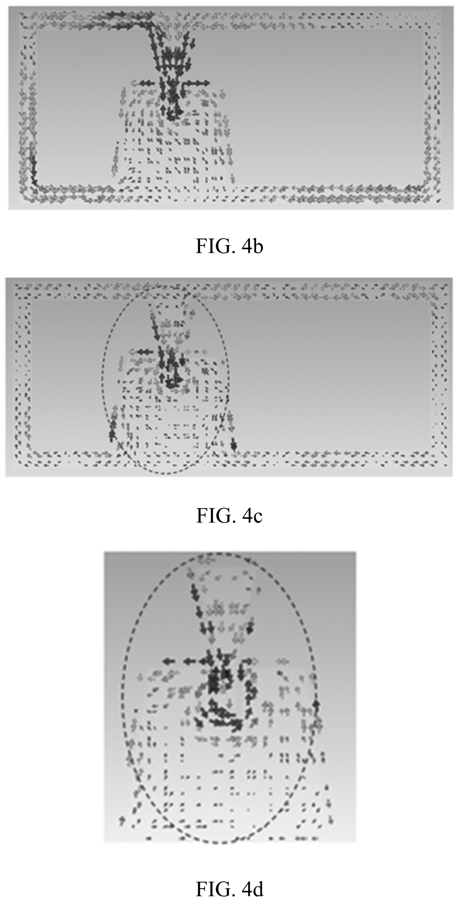

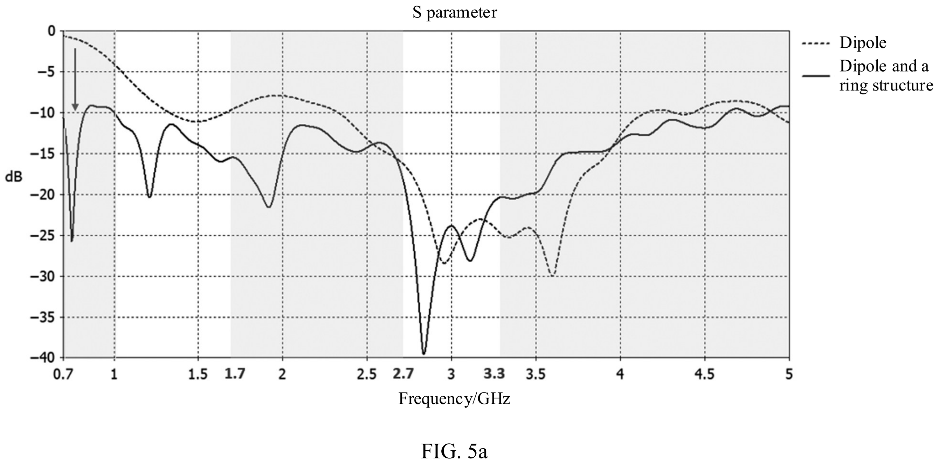

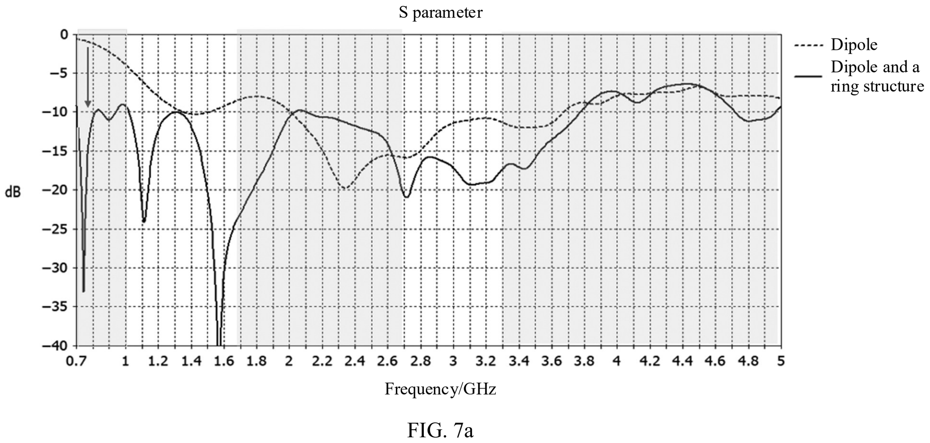

The following describes effect of the antenna apparatus according to the first embodiment of the present disclosure with reference to FIG. 4a to FIG. 5b. FIG. 4a is a diagram of simulation of a current distribution on the antenna apparatus according to the first embodiment of the present disclosure at a frequency of 0.7 GHz. FIG. 4b is a diagram of simulation of a current distribution on the antenna apparatus according to the first embodiment of the present disclosure at a frequency of 0.96 GHz. FIG. 4c is a diagram of simulation of a current distribution on the antenna apparatus according to the first embodiment of the present disclosure at a frequency of 2.5 GHz. FIG. 4d is a diagram of simulation of a current distribution of the antenna apparatus in which the third radiation conductor 18 is removed and only the dipole antenna 12 is retained according to the first embodiment of the present disclosure at a frequency of 2.5 GHz. FIG. 5a is a diagram of effect of wideband impedance matching of the antenna in cases in which only the dipole is used and a combination of the dipole and the ring structure is used. FIG. 7a is a diagram of spatial radiation efficiency of the antenna in cases in which only the dipole is used and the combination of the dipole and the ring structure is used. In the accompanying drawings, according to the first embodiment of the present disclosure, the dipole and the ring structure are also identified and are represented by a solid line. In addition, according to the first embodiment of the present disclosure, the third radiation conductor 18 is removed and only the dipole antenna 12 is retained in the antenna apparatus. This is identified as a dipole, and is represented by a dashed line.

As shown in FIG. 4a and FIG. 4b, at a frequency of 0.7 GHz, the current is concentrated in a right semi-ring distribution; and at a frequency of 0.96 GHz, the current is concentrated in a left semi-ring distribution. It can be seen that the combination of the ring structure and the dipole provides an effective radiation path for the low frequency band. As shown in FIG. 4c, at a medium and high frequency of 2.5 GHz, the current is mainly concentrated in a central dipole part, and a current distribution in the ring structure part is small. As shown in FIG. 4d, at a medium and high frequency of 2.5 GHz, a current distribution of the combination of the ring structure and the dipole is quite similar to a current distribution of the separate dipole radiation conductor after the ring structure is removed. It can be learned that at a medium and high frequency, the antenna apparatus according to the present disclosure basically maintains a characteristic of the dipole antenna, and at a low frequency, radiation is mainly performed through a current path of the ring structure.

As shown in FIG. 5a, a solution in which a separate dipole part is used can achieve good impedance matching from 1.7 GHz to 5 GHz, and a port reflection coefficient (that is, an S parameter) S11 is less than -8 dB. However, in a frequency band from 0.7 GHz to 0.96 GHz, a port reflection coefficient mismatch is severe, and the port reflection coefficient S11 ranges from -4 dB to 0 dB (not including -4 or 0). After the solution of combining the ring structure and the dipole is used, the antenna expands an impedance matching bandwidth of the low frequency band from 0.7 GHz to 0.96 GHz while maintaining matching performance from 1.7 GHz to 5 GHz, and S11 < -9 dB. It can be learned that the antenna apparatus according to the present disclosure can implement wideband impedance matching (S11 < -9 dB) in full communication frequency bands (0.7 GHz to 0.96 GHz, 1.7 GHz to 2.7 GHz, and 3.3 GHz to 5 GHz) of 5G.

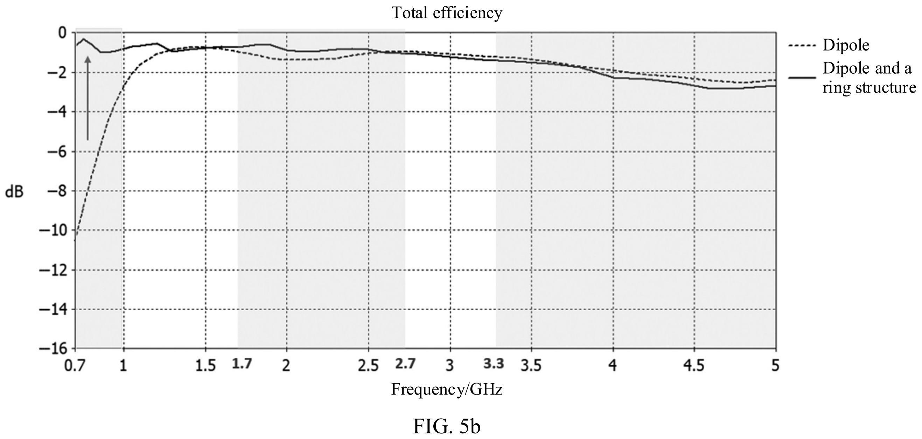

As shown in FIG. 5b, in a frequency band from 1.7 GHz to 5 GHz, radiation efficiency of the antenna apparatus according to the present disclosure approximately ranges from -3 dB to -0.6 dB, and is equivalent to radiation efficiency of the dipole. From 0.7 GHz to 0.96 GHz, the antenna apparatus according to the present disclosure improves efficiency by 2 dB to 9 dB relative to the separate dipole part. It can be learned that the antenna apparatus according to the present disclosure can maintain high radiation efficiency in full 5G frequency bands.

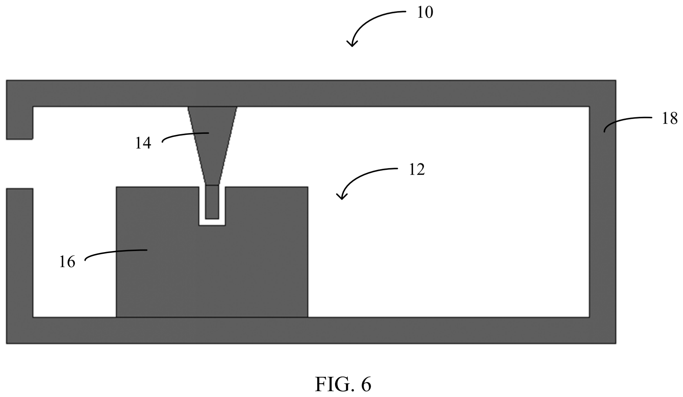

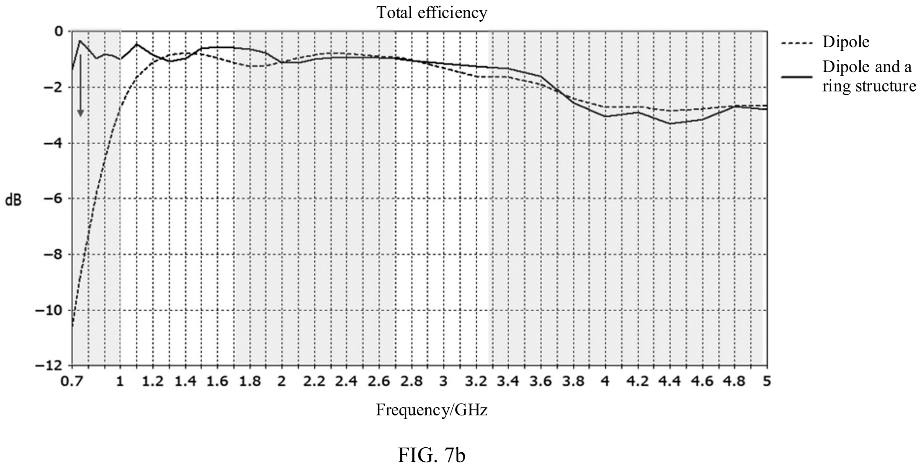

FIG. 6 is a diagram of an antenna apparatus according to a second embodiment of the present disclosure. The embodiment shown in FIG. 6 is similar to the embodiment implemented in FIG. 3. In the embodiment shown in FIG. 3, the third radiation conductor 18 is shown as a structure of a closed ring. In the embodiment shown in FIG. 6, the third radiation conductor 18 is shown as a structure of an open ring. The third radiation conductor 18 may include an indentation rather than a closed structure. FIG. 7a and FIG. 7b are respectively diagrams of simulation of an S parameter and radiation efficiency of the antenna apparatus according to the second embodiment of the present disclosure. As shown in FIG. 7a, a solution in which a separate dipole part is used can achieve good impedance matching from 1.7 GHz to 5 GHz, and a port reflection coefficient (that is, an S parameter) S11 is less than -8 dB. However, in a frequency band from 0.7 GHz to 0.96 GHz, a port reflection coefficient mismatch is severe, and the port reflection coefficient S11 ranges from -4 dB to 0 dB (not including -4 or 0). After the solution of combining the ring structure and the dipole is used, the antenna expands an impedance matching bandwidth of the low frequency band from 0.7 GHz to 0.96 GHz while maintaining matching performance from 1.7 GHz to 5 GHz, and S11 < -9 dB. It can be learned that the antenna apparatus according to the present disclosure can implement wideband impedance matching (S11 < -9 dB) in full communication frequency bands (0.7 GHz to 0.96 GHz, 1.7 GHz to 2.7 GHz, and 3.3 GHz to 5 GHz) of 5G. As shown in FIG. 7b, in a frequency band from 1.7 GHz to 5 GHz, radiation efficiency of the antenna apparatus according to the present disclosure approximately ranges from -3 dB to -0.6 dB, and is equivalent to radiation efficiency of the dipole. From 0.7 GHz to 0.96 GHz, the antenna apparatus according to the present disclosure improves efficiency by 2 dB to 9 dB relative to the separate dipole part. It can be learned that the antenna apparatus according to the present disclosure can maintain high radiation efficiency in full 5G frequency bands. In a comparison between the S parameter in the embodiment of FIG. 6 and the S parameter in the embodiment shown in FIG. 3, the S parameter in the embodiment of FIG. 3 has good performance in a high frequency region, and for example, can reach -20 dB in a frequency band from 2.7 GHz to 3.5 GHz. However, the S parameter in the embodiment of FIG. 6 has good performance in a low frequency region, and for example, can reach -20 dB in a frequency band from 1.4 GHz to 1.8 GHz and can even reach -40 dB at 1.6 GHz. Although the ring structures are the same, an opening may be disposed in the ring structure to implement radiation performance in different frequency bands. A person skilled in the art may select a size of the opening and a position of the opening in the ring structure based on performance in a needed frequency band to implement expected performance.

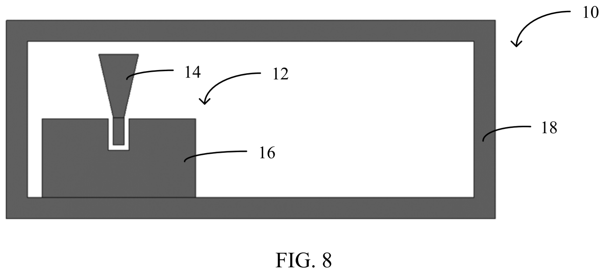

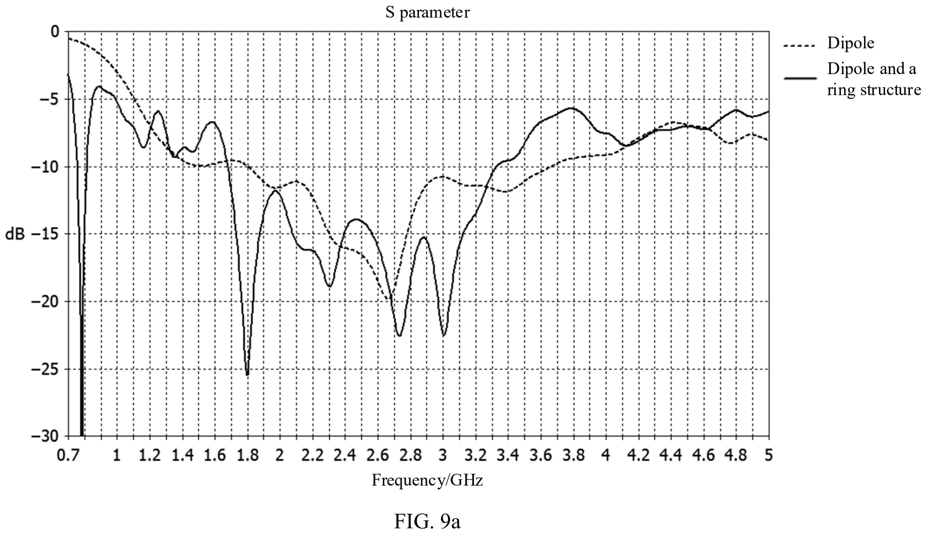

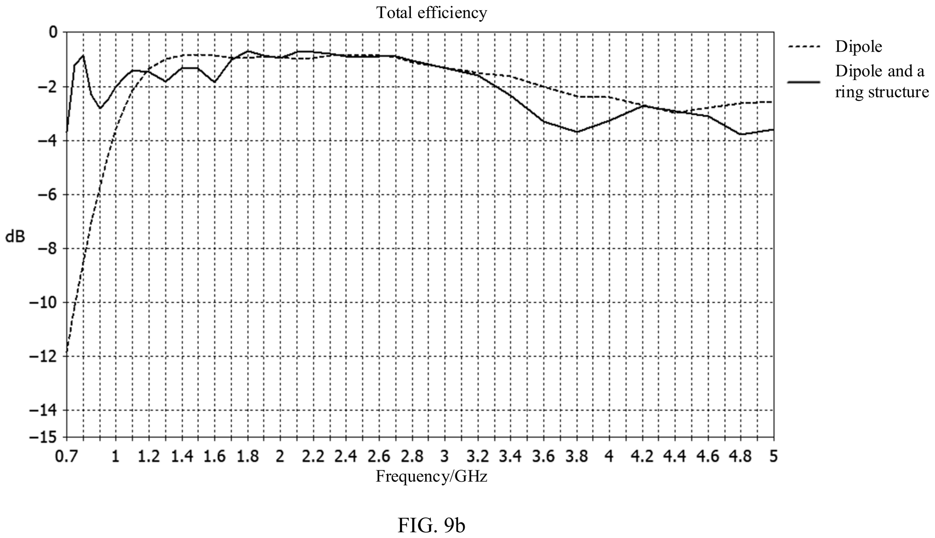

FIG. 8 is a diagram of the antenna apparatus according to a third embodiment of the present disclosure. The embodiment shown in FIG. 8 is similar to the embodiment implemented in FIG. 3. In the embodiment shown in FIG. 3, upper and lower edges of the first radiation conductor 14 and the second radiation conductor 16 of the dipole antenna 12 respectively overlap a part of an upper edge and a part of a lower edge of the third radiation conductor 18. However, in the embodiment shown in FIG. 8, the third radiation conductor 18 overlaps the second radiation conductor 16 only in a lower edge part, and separates an interstice from the first radiation conductor 14 in an upper edge part. FIG. 9a and FIG. 9b are respectively diagrams of simulation of an S parameter and radiation efficiency of the antenna apparatus according to the second embodiment of the present disclosure. As shown in FIG. 9a, a solution in which a separate dipole part is used can achieve good impedance matching from 1.7 GHz to 5 GHz, and a port reflection coefficient (that is, an S parameter) S11 is less than -8 dB. However, in a frequency band from 0.7 GHz to 0.96 GHz, a port reflection coefficient mismatch is severe, and the port reflection coefficient S11 ranges from -4 dB to 0 dB (not including -4 or 0). After the solution of combining the ring structure and the dipole is used, the antenna expands an impedance matching bandwidth of the low frequency band from 0.7 GHz to 0.96 GHz while maintaining matching performance from 1.7 GHz to 5 GHz, and S11 < -9 dB. It can be learned that the antenna apparatus according to the present disclosure can implement wideband impedance matching (S11 < -9 dB) in full communication frequency bands (0.7 GHz to 0.96 GHz, 1.7 GHz to 2.7 GHz, and 3.3 GHz to 5 GHz) of 5G. As shown in FIG. 9b, in a frequency band from 1.7 GHz to 5 GHz, radiation efficiency of the antenna apparatus according to the present disclosure approximately ranges from -3 dB to -0.6 dB, and is equivalent to radiation efficiency of the dipole. From 0.7 GHz to 0.96 GHz, the antenna apparatus according to the present disclosure improves efficiency by 2 dB to 9 dB relative to the separate dipole part. It can be learned that the antenna apparatus according to the present disclosure can maintain high radiation efficiency in full 5G frequency bands. In a comparison between the S parameter in the embodiment of FIG. 8 and the S parameter in the embodiment shown in FIG. 3, the S parameter in the embodiment of FIG. 3 has good performance in a high frequency region, and for example, can reach -20 dB in a frequency band from 2.7 GHz to 3.5 GHz. However, the S parameter in the embodiment of FIG. 8 has good performance in a medium-and-high frequency region, and for example, can reach -15 dB in a range from 1.6 GHz to 3.2 GHz. A position relationship of the third radiation conductor 18 relative to each of the first radiation conductor 14 and the second radiation conductor 16 of the dipole antenna 12 may be disposed to implement radiation performance in an expected frequency band or another performance requirement (for example, a size).

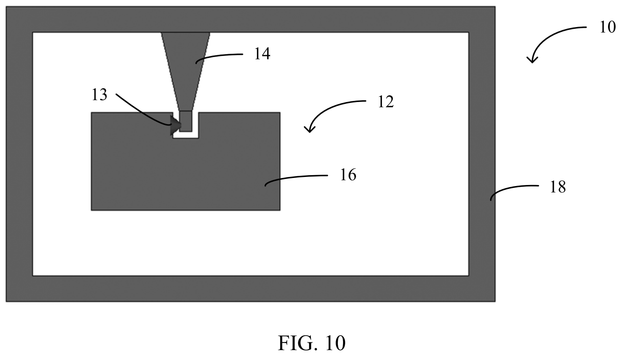

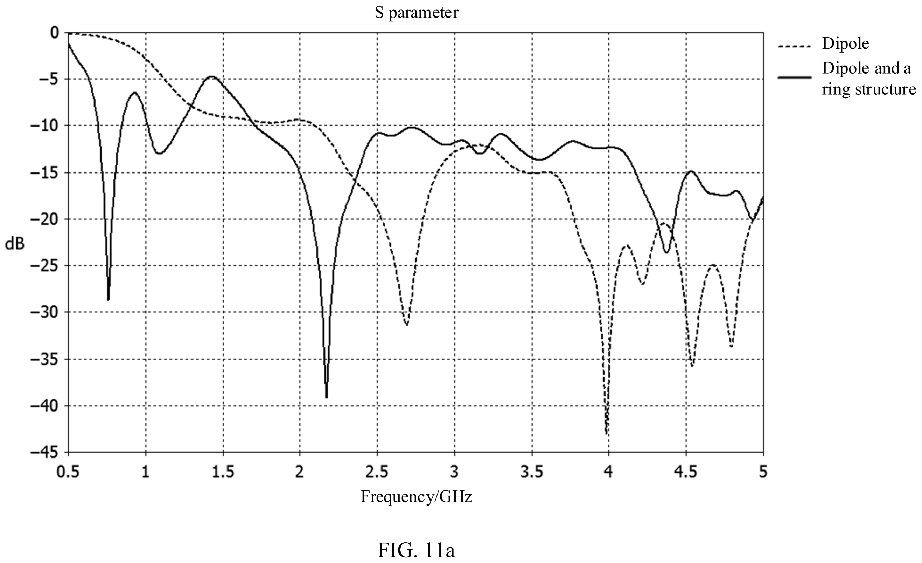

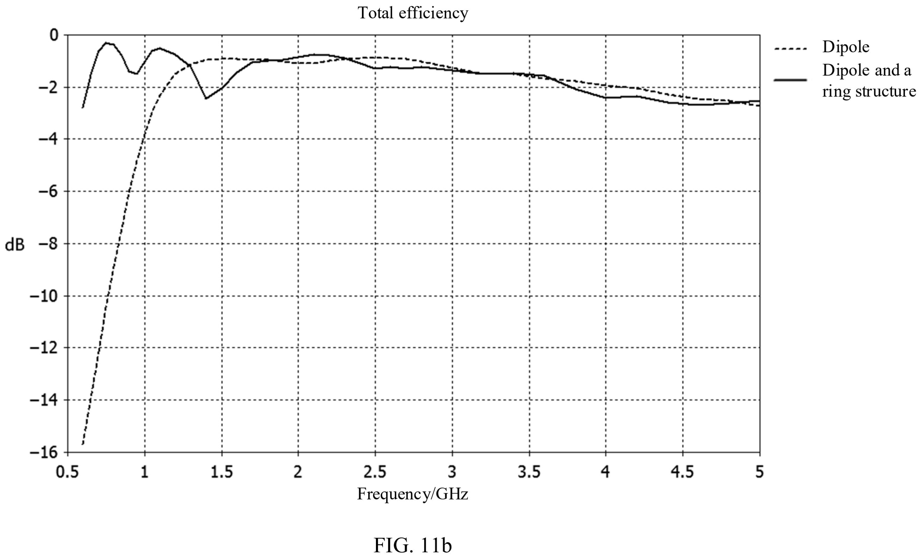

FIG. 10 is a diagram of the antenna apparatus according to the third embodiment of the present disclosure. The embodiment shown in FIG. 10 is similar to the embodiment implemented in FIG. 3. In the embodiment shown in FIG. 3, the upper and lower edges of the first radiation conductor 14 and the second radiation conductor 16 of the dipole antenna 12 respectively overlap a part of the upper edge and a part of the lower edge of the third radiation conductor 18. However, in the embodiment shown in FIG. 10, the third radiation conductor 18 overlaps the first radiation conductor 14 only in the upper edge part, and separates an interstice from the second radiation conductor 16 in the lower edge part. FIG. 11a and FIG. 11b are respectively diagrams of simulation of an S parameter and radiation efficiency of the antenna apparatus according to the second embodiment of the present disclosure. As shown in FIG. 11a, a solution in which a separate dipole part is used can achieve good impedance matching from 1.7 GHz to 5 GHz, and a port reflection coefficient (that is, an S parameter) S11 is less than -8 dB. However, in a frequency band from 0.7 GHz to 0.96 GHz, a port reflection coefficient mismatch is severe, and the port reflection coefficient S11 ranges from -4 dB to 0 dB (not including -4 or 0). After the solution of combining the ring structure and the dipole is used, the antenna expands an impedance matching bandwidth of the low frequency band from 0.7 GHz to 0.96 GHz while maintaining matching performance from 1.7 GHz to 5 GHz, and S11 < -9 dB. It can be learned that the antenna apparatus according to the present disclosure can implement wideband impedance matching (S11 < -9 dB) in full communication frequency bands (0.7 GHz to 0.96 GHz, 1.7 GHz to 2.7 GHz, and 3.3 GHz to 5 GHz) of 5G. As shown in FIG. 11b, in a frequency band from 1.7 GHz to 5 GHz, radiation efficiency of the antenna apparatus according to the present disclosure approximately ranges from -3 dB to -0.6 dB, and is equivalent to radiation efficiency of the dipole. From 0.7 GHz to 0.96 GHz, the antenna apparatus according to the present disclosure improves efficiency by 2 dB to 9 dB relative to the separate dipole part. It can be learned that the antenna apparatus according to the present disclosure can maintain high radiation efficiency in full 5G frequency bands. In a comparison between the S parameter in the embodiment of FIG. 8 and the S parameter in the embodiment shown in FIG. 10, the S parameter in the embodiment of FIG. 8 has good performance in a medium-and-high frequency region, and for example, can reach -15 dB in a range from 1.6 GHz to 3.2 GHz. The S parameter in the embodiment of FIG. 10 also has good performance in a medium-and-high frequency region, and for example, can reach -20 dB in a range from 2 GHz to 2.4 GHz, but performance in a frequency range is slightly different from that in FIG. 8. A position relationship of the third radiation conductor 18 relative to each of the first radiation conductor 14 and the second radiation conductor 16 of the dipole antenna 12 may be disposed to implement radiation performance in an expected frequency band or another performance requirement (for example, a size).

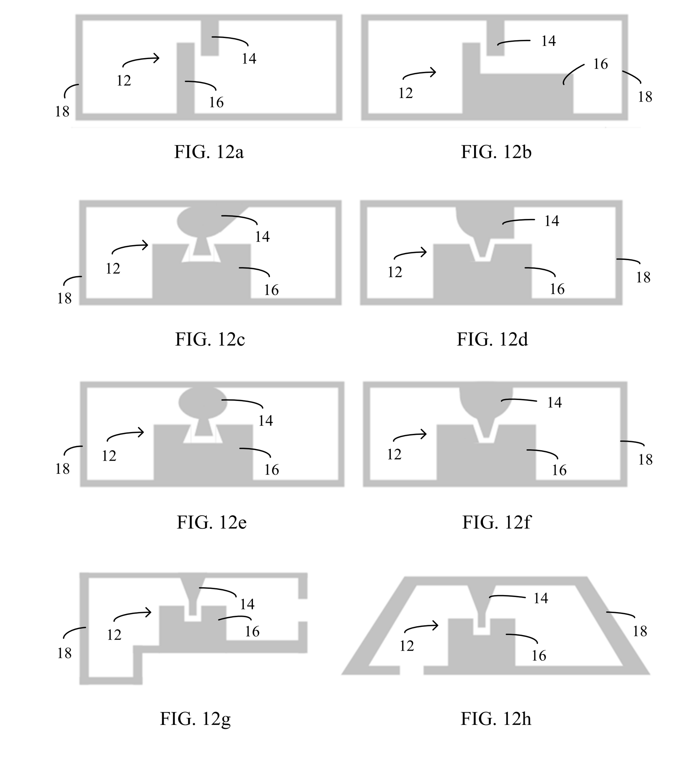

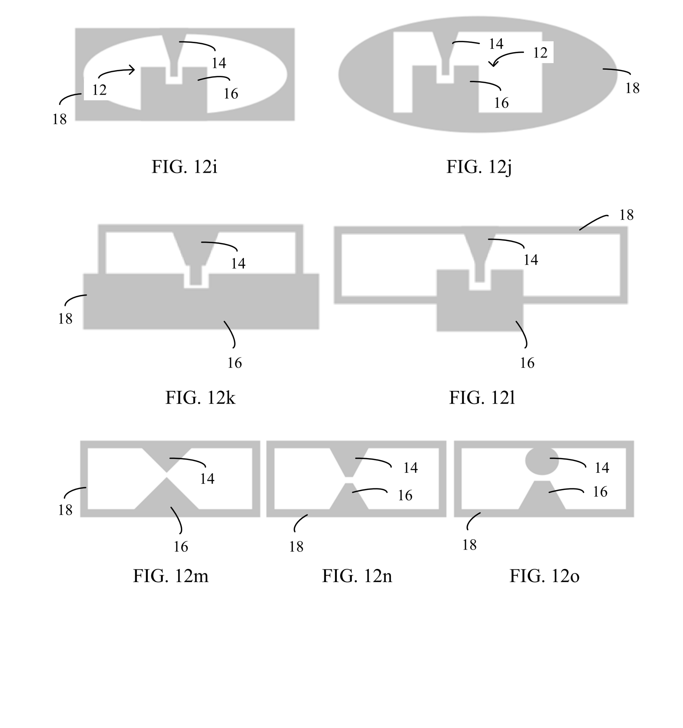

FIG. 12a to FIG. 12o are respectively diagrams of the antenna apparatus according to a plurality of embodiments of the present disclosure. Based on the antenna apparatus in embodiments of the present disclosure, the two separate radiation conductors 14 and 16 forming the dipole antenna 12 may be in various forms, and are not limited to polygons (such as triangles, rectangles, and pentagons), circles, ellipses, any other geometric patterns, a combination thereof, or a partial combination thereof. As shown in FIG. 12a to FIG. 12f, the radiation conductors 14 and 16 may be implemented in various forms, for example, a rectangular strip, a circle, an arc, an ellipse, or a combination thereof. In addition, the separation interstice between the radiation conductors 14 and 16 may also be in any appropriate form. In addition, shapes of the indentation part and the protrusion part of the radiation conductor may also be implemented in various forms, for example, may be tapered shapes, or may not be tapered shapes. The ring form of the third radiation conductor 18 may also be in various implementation forms. As shown in FIG. 12g to FIG. 12l, the ring form of the third radiation conductor 18 may have an indentation, or may be closed. The ring form of the third radiation conductor 18 is not limited to a rectangular ring, and may alternatively be a regular ring or an irregular ring such as an elliptical ring or a trapezoidal ring, or a combination thereof. An overlapping position between the third radiation conductor 18 and the first radiation conductor 14 and/or the second radiation conductor 16 may alternatively be any appropriate position. As shown in FIG. 12g and FIG. 12h, the third radiation conductor 18 overlaps the upper edge or the lower edge of the first radiation conductor 14 and/or the second radiation conductor 16. However, in the embodiments of FIG. 12k to FIG. 12l, the overlapping position between the third radiation conductor 18 and the second radiation conductor 16 may alternatively be a middle position rather than an edge position of the second radiation conductor 16. In addition, the first radiation conductor 14 and/or the second radiation conductor 16 may not be provided with an indentation or a protrusion. As shown in the embodiments of FIG. 12m to FIG. 12o, the first radiation conductor 14 and the second radiation conductor 16 may be oppositely arranged in a longitudinal direction. In this case, a coaxial cable may be arranged in a longitudinal extension direction of the first radiation conductor 14 and the second radiation conductor 16 to implement feeding.

In addition, although operations are described in a particular order, it should be understood that it is required that the operations are performed in the shown particular order or in sequence, or it is required that all the operations shown in the figures should be performed to achieve an expected result. In a specific environment, multi-task and parallel processing may be advantageous. Similarly, although several specific implementation details are included in the foregoing descriptions, these should not be construed as limiting the scope of the present disclosure. Some features described in the context of an individual embodiment may alternatively be implemented in combination in a single implementation. On the contrary, various features described in the context of a single implementation may alternatively be implemented in a plurality of implementations individually or in any appropriate sub-combination.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

## Claims

1. An antenna apparatus (10), comprising:
a dipole antenna (12), comprising a first radiation conductor (14) and a second radiation conductor (16) that are adjacent to each other and arranged separately; and
a third radiation conductor (18), located on a same plane as the dipole antenna, and at least partially surrounding the first radiation conductor (14) and the second radiation conductor (16).

2. The antenna apparatus (10) according to claim 1, wherein a sum of lengths of outer circumferential edges of the first radiation conductor (14) and the second radiation conductor (16) is 1/2 of a first wavelength, and the first wavelength represents a wavelength corresponding to a first communication frequency.

3. The antenna apparatus (10) according to claim 2, wherein the first communication frequency ranges from 1.7 GHz to 2.7 GHz or from 3.3 GHz to 5 GHz.

4. The antenna apparatus (10) according to claim 2, wherein a sum of lengths of inner circumferential edges of the third radiation conductor (18) is 1 to 1.5 times a second wavelength, the second wavelength represents a wavelength corresponding to a second communication frequency, and the first communication frequency is higher than the second communication frequency.

5. The antenna apparatus (10) according to claim 4, wherein the second communication frequency ranges from 0.7 GHz to 0.96 GHz.

6. The antenna apparatus (10) according to claim 1, wherein the first radiation conductor (14) and the second radiation conductor (16) are oppositely arranged in a first direction, and a length of the third radiation conductor (18) in the first direction is close to or equal to a length of the dipole antenna (12) in the first direction.

7. The antenna apparatus (10) according to any one of claims 1 to 6, wherein the antenna apparatus (10) is fed at adjacent and separated parts of the first radiation conductor (14) and the second radiation conductor (16).

8. The antenna apparatus (10) according to claim 7, wherein a spacing between the first radiation conductor (14) and the second radiation conductor (16) ranges from 0.5 mm to 8 mm.

9. The antenna apparatus (10) according to claim 8, wherein the first radiation conductor (14) and the second radiation conductor (16) are configured to perform feeding through a coaxial cable.

10. The antenna apparatus (10) according to any one of claims 1 to 9, wherein an inner edge contour and/or an outer edge contour of the third radiation conductor (18) coincide/coincides with a part of outer edge contours of both of the first radiation conductor (14) and the second radiation conductor (16).

11. The antenna apparatus (10) according to any one of claims 1 to 9, wherein an inner edge contour and/or an outer edge contour of the third radiation conductor (18) coincide/coincides with a part of an outer edge contour of one of the first radiation conductor (14) and the second radiation conductor (16).

12. The antenna apparatus (10) according to any one of claims 1 to 11, wherein shapes of the first radiation conductor (14) and the second radiation conductor (16) are different from each other.

13. The antenna apparatus (10) according to any one of claims 1 to 12, wherein shapes of at least one of the first radiation conductor (14) and the second radiation conductor (16) gradually increase or decrease in an extension direction.

14. The antenna apparatus (10) according to any one of claims 1 to 13, wherein one of the first radiation conductor (14) and the second radiation conductor (16) comprises an indentation part (162), the other one of the first radiation conductor (14) and the second radiation conductor (16) comprises a protrusion part (142), and the protrusion part at least partially extends into the indentation part.

15. The antenna apparatus (10) according to any one of claims 1 to 14, wherein the third radiation conductor (18) is a closed ring.

16. The antenna apparatus (10) according to any one of claims 1 to 14, wherein the third radiation conductor (18) is an open ring, and a size of an opening of the open ring is not greater than the sum of the lengths of the outer circumferential edges of the first radiation conductor (14) and the second radiation conductor (16).

17. An antenna assembly, comprising:
a glass substrate (20); and
the antenna apparatus (10) according to any one of claims 1 to 16, wherein the antenna apparatus (10) is attached to the glass substrate (20).

18. The antenna assembly according to claim 17, wherein the glass substrate (20) comprises a plurality of layers of glass, and the antenna apparatus (10) is attached to a surface of innermost glass in the plurality of layers of glass.

19. The antenna assembly according to claim 17 or 18, wherein the glass substrate (20) comprises:
upper-layer glass (22);
lower-layer glass (26); and
a coating layer (24) located between the upper-layer glass (22) and the lower-layer glass (26), wherein the coating layer (24) comprises a window region (28) in which no coating is disposed, and the antenna apparatus (10) is installed in a region that is of the glass substrate (20) and that corresponds to the window region (28).

20. The antenna assembly according to any one of claims 17 to 19, wherein the antenna apparatus (10) is a vehicle-mounted antenna apparatus, and vehicle glass is used as the glass substrate (20).

21. The antenna assembly according to claim 20, wherein the vehicle glass comprises a panoramic sunroof, a front windshield, a rear windshield, or vehicle window glass.

22. A vehicle, comprising:
a vehicle body; and
one or more antenna assemblies according to any one of claims 17 to 21, wherein the one or more antenna assemblies are installed on the vehicle body.
